# EUROPEAN PATENT APPLICATION

(11) **EP 4 525 412 A1**
(43) Date of publication of application: **19.03.2025**
(21) Application number: 23849306.8
(22) Date of filing: 28.07.2023
(51) Int. Cl.: H04L 67/141

(54) **DATA TRANSMISSION METHOD AND APPARATUS, STORAGE MEDIUM, AND ELECTRONIC DEVICE**

(30) Priority: 04.08.2022 CN 202210934730
(71) Applicant: Alipay (Hangzhou) Information Technology Co., Ltd., Hangzhou, Zhejiang 310000 (CN)
(72) Inventor: ZHANG, Chenglong, Hangzhou, Zhejiang 310000 (CN); YANG, Yang, Hangzhou, Zhejiang 310000 (CN)
(74) Representative: Fish & Richardson P.C.
(86) International application number: PCT/CN2023/109887
(87) International publication number: WO 2024/027598

(57) **Abstract**

This specification discloses data transmission methods and apparatuses, storage media, and electronic devices. A server can send session state information of a session between the server and a client device to the client device for storage. When the client device needs to use the session again, the session state information can be carried in a connection request and sent to the server. The server can resume the session between the server and the client device based on the connection request carrying the session state information sent by the client device, thereby reducing usage of memory of the server by a session between the server and each client device that is stored by the server.

## Description

### TECHNICAL FIELD

This specification relates to the field of communication technologies, and in particular, to data transmission methods and apparatuses, storage media, and electronic devices.

### BACKGROUND

Currently, after a client device establishes a connection to a server through a handshake protocol, the server can create a session (that is, a process of communication between the client device and the server). After a period of communication between the client device and the server ends, the server can store the created session, so that when the client device accesses the server again, the server can use the stored session again to continue communicating with the client device (that is, there is no need to perform a handshake again).

However, because the server often communicates concurrently with a large quantity of client devices, sessions stored by the server between the server and different client devices occupy a significant amount of memory of the server. This imposes stricter requirements on the memory of the server. Moreover, excessively high memory usage may cause abnormal server operation or even privacy data leakage.

### SUMMARY

This specification provides data transmission methods and apparatuses, storage media, and electronic devices to resolve a problem that sessions stored by a server occupy a large amount of memory in a related technology.

The following technical solutions are used in this specification. This specification provides a data transmission method, where the method is applied to a server and includes: determining, in response to a connection request sent by a client device, whether the connection request carries session state information, where the session state information includes parameters based on which the server and the client device perform data transmission through a created session, and a session identifier; and if yes, resuming the session between the server and the client device based on the session state information carried in the connection request, and performing data transmission with the client device through the resumed session; or if no, creating a session between the server and the client device, and sending session state information generated for the created session to the client device, so that the client device stores the session state information.

Optionally, the sending session state information generated for the created session to the client device specifically includes: encrypting, by using each predetermined encryption key, the session state information generated for the created session, to obtain encrypted session state information; and sending the encrypted session state information to the client device.

Optionally, determining each encryption key specifically includes: obtaining an initial key and N key parameters, where N is a positive integer; and generating an N^{th} encryption key based on an (N-1)^{th} encryption key and an N^{th} key parameter that are obtained, where a first encryption key is generated based on the initial key and a first key parameter.

Optionally, the encrypting, by using each predetermined encryption key, the session state information generated for the created session, to obtain encrypted session state information specifically includes: encrypting, by using each encryption key in sequence, the session state information based on an order of encrypting the session state information with each encryption key, to obtain the encrypted session state information, where for each encryption key, session state information obtained after encryption with a previous encryption key is encrypted by using the encryption key, to obtain session state information encrypted with the encryption key.

Optionally, encrypting, by using the encryption key, the session state information obtained after encryption with the previous encryption key, to obtain the session state information encrypted with the encryption key specifically includes: encrypting, by using the encryption key, the session state information obtained after encryption with the previous encryption key, to obtain basic encrypted session state information; and permuting the basic encrypted session state information by using at least one predetermined permutation method, to obtain the session state information encrypted with the encryption key, where the permutation method includes at least one of nonlinear permutation, linear permutation, or reverse permutation.

Optionally, the resuming the session between the server and the client device based on the session state information carried in the connection request specifically includes: performing, based on a predetermined integrity verification algorithm, integrity verification on the session state information carried in the connection request; and if it is determined that the session state information is complete, resuming the session between the server and the client device based on the session state information.

Optionally, the resuming the session between the server and the client device specifically includes: determining, based on a key identifier carried in the session state information, each decryption key corresponding to the session state information; decrypting the session state information by using each decryption key, to obtain decrypted session state information; and resuming the session between the server and the client device based on the decrypted session state information.

This specification provides a data transmission method, where the method is applied to a client device and includes: determining, by the client device, a target server, where the target server is configured to perform data transmission with the client device; determining whether the client device locally stores session state information based on which a session is performed with the target server; and if yes, sending a connection request carrying the session state information to the target server, so that the target server resumes the session between the server and the client device based on the session state information and performs data transmission through the resumed session; or if no, sending a connection request to the target server, so that the target server creates a session between the server and the client device based on the connection request.

This specification provides a data transmission apparatus, including: a determining module, configured to determine, in response to a connection request sent by a client device, whether the connection request carries session state information, where the session state information includes parameters based on which a server and the client device perform data transmission through a created session, and a session identifier; a resuming module, configured to resume the session between the server and the client device based on the session state information carried in the connection request, and perform data transmission with the client device through the resumed session, when it is determined that the connection request carries the session state information; and a creation module, configured to create a session between the server and the client device, and send session state information generated for the created session to the client device, when it is determined that the connection request does not carry the session state information, so that the client device stores the session state information.

This specification provides a data transmission apparatus, including: a determining module, configured to determine a target server, where the target server is configured to perform data transmission with a client device; and a determining and executing module, configured to determine whether the client device locally stores session state information based on which a session is performed with the target server; and if yes, send a connection request carrying the session state information to the target server, so that the target server resumes the session between the server and the client device based on the session state information and performs data transmission through the resumed session; or if no, send a connection request to the target server, so that the target server creates a session between the server and the client device based on the connection request.

This specification provides a computer-readable storage medium. The storage medium stores a computer program, and when the computer program is executed by a processor, the above-mentioned data transmission method is implemented.

This specification provides an electronic device, including a memory, a processor, and a computer program stored in the memory and capable of running on the processor, where when the processor executes the program, the above-mentioned data transmission method is implemented.

At least one of the above-mentioned technical solutions used in this specification can achieve the following beneficial effects: In the data transmission method provided in this specification, in response to the connection request sent by the client device, it is determined whether the connection request carries the session state information, where the session state information includes the parameters based on which the server and the client device perform data transmission through the created session, and the session identifier; and if yes, the session between the server and the client device is resumed based on the session state information carried in the connection request, and data transmission is performed with the client device through the resumed session; or if no, the session between the server and the client device is created, and the session state information generated for the created session is sent to the client device, so that the client device stores the session state information.

As can be determined from the above-mentioned method, the server can send the session state information of the session between the server and the client device to the client device for storage. When the client device needs to use the session again, the session state information can be carried in the connection request and sent to the server. The server can resume the session between the server and the client device based on the connection request carrying the session state information sent by the client device, thereby reducing usage of memory of the server by a session between the server and each client device that is stored by the server.

### BRIEF DESCRIPTION OF DRAWINGS

The accompanying drawings described here are used to provide further understanding of this specification and constitute a part of this specification. The example embodiments of this specification and their descriptions are used to explain this specification, and do not constitute an undue limitation on this specification. In the accompanying drawings:
FIG. 1 is a schematic flowchart illustrating a data transmission method, according to this specification;
FIG. 2 is a schematic flowchart illustrating another data transmission method, according to this specification;
FIG. 3 is a schematic diagram illustrating a data transmission apparatus, according to this specification;
FIG. 4 is a schematic diagram illustrating another data transmission apparatus, according to this specification; and
FIG. 5 is a schematic diagram illustrating an electronic device corresponding to FIG. 1, according to this specification.

### DESCRIPTION OF EMBODIMENTS

To make the objectives, technical solutions, and advantages of this specification clearer, the following clearly and comprehensively describes the technical solutions of this specification with reference to specific embodiments of this specification and corresponding accompanying drawings. It is clear that the described embodiments are merely some but not all of embodiments of this specification. Based on embodiments of this specification, all other embodiments obtained by a person of ordinary skill in the art without creative efforts fall within the protection scope of this specification.

Currently, after a client device establishes a connection to a server through a handshake protocol, the server creates a session with the client device and sends unique identification information (Session ID) of the session to the client device, and then can perform data transmission with the client device through the session. After the client device ends this session, the server can store a session state with the client device, so that the client device does not need to reestablish a connection through the handshake protocol when the client device needs to perform data transmission next time, but can directly resume the session based on the session ID stored in the client device and perform data transmission.

However, because the server often needs to perform data transmission with a large quantity of client devices concurrently, the server needs to store a large quantity of sessions with different client devices. Consequently, a significant amount of memory of the server is occupied. In addition, in a distributed server cluster (that is, during use of a single server, performance of the single server cannot be increased infinitely due to its own hardware resource limitation and other constraints. Therefore, to further improve the performance of the server, a plurality of servers can be used to provide services together, that is, provide services in the form of a server cluster). However, because a server accessed by a client device each time may not be the same, a new server cannot resume a session between the client device and a previous server based on a session ID stored in the client device, resulting in inability to properly resume the session based on the session ID in the server cluster.

The technical solutions provided in the embodiments of this specification are described in detail below with reference to the accompanying drawings.

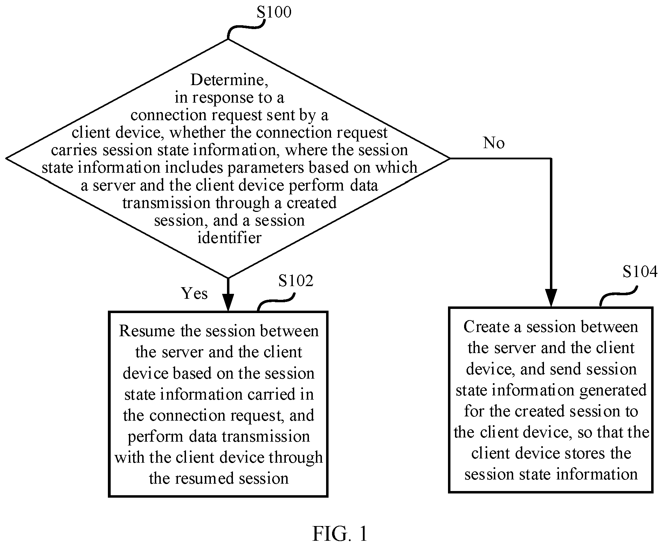

FIG. 1 is a schematic flowchart illustrating a data transmission method, according to this specification. The method includes the following steps S100 to S104.

S100: Determine, in response to a connection request sent by a client device, whether the connection request carries session state information, where the session state information includes parameters based on which a server and the client device perform data transmission through a created session, and a session identifier; and if yes, perform step S102; or if no, perform step S104.

In this specification, after receiving the connection request sent by the client device, the server can determine, in response to the connection request sent by the client device, whether the received connection request carries the session state information. If yes, the server resumes the session between the server and the client device based on the session state information, and performs data transmission with the client device through the resumed session; or if no, creates a session between the server and the client device, and performs data transmission with the client device through the created session, where the session state information includes the parameters based on which the server and the client device perform data transmission through the created session, such as a version of an encryption protocol negotiated by the client device and the server, a cipher suite negotiated by the client device and the server for data communication, a key master_key negotiated by the client device and the server for data communication, and a time (timestamp) at which the session state information can be reused, and a session identifier (Session ID) of the session.

S102: Resume the session between the server and the client device based on the session state information carried in the connection request, and perform data transmission with the client device through the resumed session.

If the server determines that the connection request sent by the client device carries the session state information, the server can resume the session between the server and the client device based on the session state information carried in the connection request sent by the client device, and perform data transmission with the client device through the resumed session.

Specifically, to prevent the encrypted session state information from being tampered with during storage in the client device, the server can perform integrity verification on the encrypted session state information by using a predetermined integrity verification algorithm before sending the session state information to the client device for storage. The predetermined integrity verification algorithm may be, for example, a keyed-hash message authentication code (HMAC) or a message digest algorithm (SM3). Correspondingly, before the server resumes the session with the client device based on the session state information carried in the client device, the server needs to first perform integrity verification on the session state information. The following uses the HMAC algorithm as an example to describe in detail the process of performing integrity verification on the session state information by the server.

After obtaining the session state information carried in the connection request sent by the client device, the server can determine, from a predetermined configuration file based on an identifier of the session state information, an HMAC key corresponding to the session state information, calculate a key identifier (key-name) in the session state information, an initialization vector (iv), and an HMAC value corresponding to the encrypted session state information by using the HMAC key, and compare the calculated key identifier (key-name), initialization vector (iv), and HMAC value corresponding to the encrypted session state information with a MAC value carried in the session state information. If they are consistent, it can be determined that the session state information is complete.

In the above-mentioned content, the key identifier (key-name) is an identifier corresponding to a set of keys used to encrypt the session state information, and the initialization vector (iv) is an initialization vector used to further encrypt the session state information. In other words, after the session state information is encrypted, the server can store the key identifier corresponding to the keys used in the encryption process and the initialization vector used in the encryption process in the session state information (it is worthwhile to note that the encryption here refers to the encryption of the session state information including the version of the encryption protocol negotiated by the client device and the server, the cipher suite negotiated by the client device and the server for data communication, the key master_key negotiated by the client device and the server for data communication, the time (timestamp) at which the session state information can be reused, the session identifier (Session ID) of the session, etc. in the above-mentioned content. After determining the integrity of the above-mentioned key identifier (key-name), initialization vector (iv), and encrypted session state information, the server can decrypt the encrypted session state information based on the above-mentioned key identifier (key-name) and initialization vector (iv)).

Further, after the server performs integrity verification on the session state information carried in the connection request sent again by the client device, the server can determine, based on the key identifier carried in the session state information, decryption keys corresponding to the session state information, decrypt the session state information by using the decryption keys to obtain the decrypted session state information, and resume the session with the client device based on the decrypted session state information.

Further, after obtaining the decrypted session state information, the server can determine the time (timestamp) at which the session state information carried in the decrypted session state information can be reused, and determine whether a time interval between the time of a last conversation with the client device and the time when the client device sends the connection request again exceeds the time (timestamp) at which the session state information can be reused; and if no, resume the session with the client device. If yes, the server needs to reconnect to the client device through a predetermined handshake protocol.

S104: Create a session between the server and the client device, and send session state information generated for the created session to the client device, so that the client device stores the session state information.

If the server determines that the connection request sent by the client device does not carry the session state information, the server can receive the connection request sent by the client device, mutually perform identity authentication with the client device according to the predetermined handshake protocol in response to the received connection request, negotiate with the client device to determine the version of the encryption protocol used in the data transmission process, negotiate with the client device to determine the cipher suite used for data transmission, key master_key, and other information, and then create the session with the client device.

After creating the session with the client device, the server can generate the session state information for the created session and send the session state information to the client device, so that the client device can use the session state information when the client device needs to initiate a session again after the current session ends.

Further, when the server needs to send the session state information to the client device, the server can encrypt the session state information by using a predetermined encryption method, and send the encrypted session state information to the client device.

In the above-mentioned content, the method for encrypting the session state information by the server may be encrypting the session state information by using predetermined encryption keys to obtain the encrypted session state information, and sending the encrypted session state information to the client device.

Specifically, the server can encrypt, by using each encryption key in sequence, the session state information based on an order of encrypting the session state information with each predetermined encryption key, to obtain the encrypted session state information, where for each encryption key, session state information obtained after encryption with a previous encryption key is encrypted by using the encryption key, to obtain session state information encrypted with the encryption key.

A method for encrypting the session state information obtained after encryption with the previous encryption key by the server by using the encryption key may be as follows: The server can determine an operation result of the session state information encrypted with the encryption key and the previous encryption key according to a predetermined operation method. The operation method here may be, for example, an exclusive OR operation, an AND operation, or a summation operation. Correspondingly, if the operation method used by the server is the exclusive OR operation, the above-mentioned operation result is an exclusive OR operation result.

Further, the server can use the determined operation result of the session state information encrypted with the encryption key and the previous encryption key as basic encrypted session state information, and then can permute the basic encrypted session state information by using at least one predetermined permutation method, to obtain the final output session state information encrypted with the encryption key, where the permutation method includes at least one of nonlinear permutation (for example, permutation by reference to an S box Sbox), linear permutation (for example, permutation by a left shift operation), or reverse permutation (that is, adjusting an order of each value in the basic encrypted session state information). For example, assuming that the value before the reverse permutation is: (a1, a2, a3, a4), the value after the reverse permutation is (a4, a3, a2, a1).

In the above-mentioned content, a method for determining each encryption key used in each round of encryption may be obtaining an initial key and N key parameters, where N is a positive integer, and generating an N^{th} encryption key based on an (N-1)^{th} encryption key and an N^{th} key parameter that are obtained, where a first encryption key is generated based on the initial key and a first key parameter, and the key parameters here are a predetermined set of fixed parameters.

Specifically, a method for generating the N^{th} key based on the (N-1)^{th} key and the N^{th} key parameter that are obtained may be as follows: The server can determine an operation result of the (N-1)^{th} encryption key and the N^{th} key parameter according to a predetermined operation method, where the operation method may be, for example, an XOR operation, an AND operation, or a summation operation, and further permute the determined operation result of the (N-1)^{th} encryption key and the N^{th} key parameter by using a predetermined permutation algorithm, to obtain the N^{th} encryption key.

In addition, the server can further group the session state information that needs to be encrypted (for example, group every 128 bits in the session state information, that is, group every 16 bytes), then encrypt each group of session state information by using the above-mentioned method, to obtain a result of each group of encrypted session state information, and then for each group of encrypted session state information, perform an operation (for example, an XOR operation) on the group of encrypted session state information and a previous group of encrypted session state information according to a predetermined algorithm, to obtain further encrypted session state information for the group of encrypted session state information, where the first group of encrypted session state information can be pre-computed with a predetermined initialization vector (iv), to obtain further encrypted session state information for the first encrypted session state information.

Further, the server can determine a key identifier (key-name) corresponding to each encryption key used in the above-mentioned content (the key identifier may be determined by using a random number generator or other methods, or may be obtained from a configuration file), and determine, by using a predetermined HMAC key (which may be generated by using a random number generator or obtained from a configuration file), the key identifier, the initialization vector (iv) used in the above-mentioned content, the HMAC value of the finally obtained encrypted session state information, and a message authentication code (MAC) value corresponding to the key identifier, initialization vector (iv) used in the above-mentioned content, and HMAC value of the finally obtained encrypted session state information, and send the key identifier, the initialization vector (iv) used in the above-mentioned content, the HMAC value of the finally obtained encrypted session state information, and the MAC value to the client device for storage by the client device, where the message authentication code (MAC) is used to verify integrity of the session state information.

It is worthwhile to note that the encryption keys used by the server to encrypt the session state information may be generated by using the above-mentioned method, or may be encryption keys obtained from a predetermined configuration file (the configuration file here stores a plurality of sets of encryption keys specified by a developer, where each set of encryption keys corresponds to one key identifier, and several servers in a server cluster can use the same set of configuration files). If the encryption keys used by the server are obtained from the configuration file, other servers in the same cluster as the server can also determine a corresponding decryption key from the configuration file based on the key identifier in the session state information carried in the connection request sent by the client device, to decrypt the session state information by using the decryption key and resume the session with the client device, so that the session between the client device and any server in the server cluster can be reused on different servers in the server cluster.

As can be determined from the above-mentioned content, after creating the session with the client device, the server can encrypt the session state information of the session by using a predetermined encryption algorithm, and send the encrypted session state information to the client device for storage. When the client device needs to use the session again, the session state information stored in the client device can be carried in the connection request and sent to the server, so that the server can resume the session based on the session state information, thereby reducing usage of memory of the server by a session between the server and each client device that is stored by the server, and enabling session reuse in the server cluster.

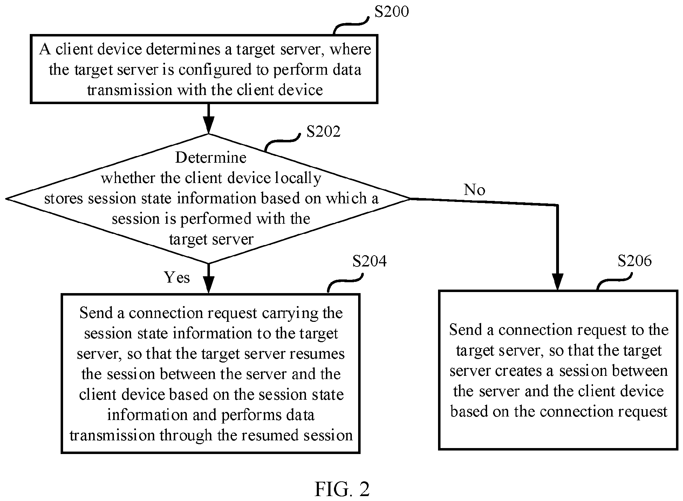

To further describe the above-mentioned content in detail, this specification further provides a data transmission method, as shown in FIG. 2.

FIG. 2 is a schematic flowchart illustrating another data transmission method, according to this specification. The method includes the following steps S200 to S206.

S200: A client device determines a target server, where the target server is configured to perform data transmission with the client device.

S202: Determine whether the client device locally stores session state information based on which a session is performed with the target server; and if yes, perform step S204; or if no, perform step S206.

S204: Send a connection request carrying the session state information to the target server, so that the target server resumes the session between the server and the client device based on the session state information and performs data transmission through the resumed session.

S206: Send a connection request to the target server, so that the target server creates a session between the server and the client device based on the connection request.

Before the client device needs to send the connection request to the server, the client device can first determine the server that receives the connection request as the target server, and then determine whether the client device locally stores the session state information based on which the session is performed with the target server. If it is determined that there is no such session state information, the client device can send the connection request to the server, perform identity authentication with the server according to a predetermined handshake protocol, negotiate with the server to determine a version of an encryption protocol used in the data transmission process, and negotiate with the client device to determine a cipher suite used for data transmission, a key master_key, and other information. Then the client device performs data transmission with the server in response to the session created by the server with the client device, and receives and stores the session state information sent by the server.

If the client device determines that the client device locally stores the session state information based on which the session is performed with the target server, the client device can obtain the session state information locally, and then send the connection request carrying the session state information to the server, so that the server resumes the session with the client device based on the connection request carrying the session state information, and the client device performs data transmission with the server through the session resumed by the server with the client device.

It is worthwhile to note that because the session state information stored in the client device is encrypted by the server, the client device can only store the session state information but cannot read specific content in the session state information or modify the session state information.

As can be determined from the above-mentioned content, the client device can store the encrypted session state information sent by the server, and when the client device sends the connection request to the server again, the session state information is carried in the connection request and sent to the server, thereby implementing session reuse and reducing usage of memory of the server by a session between the server and each client device that is stored by the server.

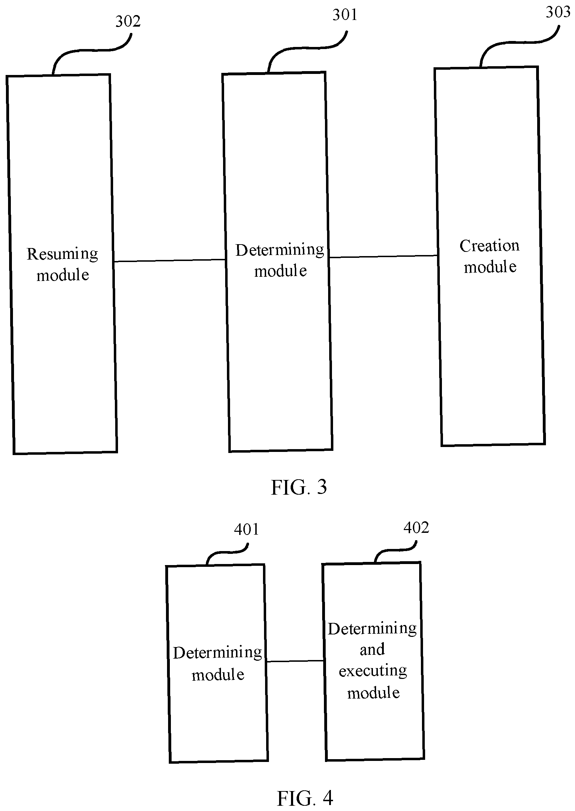

The data transmission method provided in one or more embodiments of this specification is described above. Based on the same idea, this specification further provides a corresponding data transmission apparatus, as shown in FIG. 3 and FIG. 4.

FIG. 3 is a schematic diagram illustrating a data transmission apparatus, according to this specification. The apparatus includes: a determining module 301, configured to determine, in response to a connection request sent by a client device, whether the connection request carries session state information, where the session state information includes parameters based on which a server and the client device perform data transmission through a created session, and a session identifier; a resuming module 302, configured to resume the session between the server and the client device based on the session state information carried in the connection request, and perform data transmission with the client device through the resumed session, when it is determined that the connection request carries the session state information; and a creation module 303, configured to create a session between the server and the client device, and send session state information generated for the created session to the client device, when it is determined that the connection request does not carry the session state information, so that the client device stores the session state information.

Optionally, the creation module 303 is specifically configured to encrypt, by using each predetermined encryption key, the session state information generated for the created session, to obtain encrypted session state information; and send the encrypted session state information to the client device.

Optionally, the creation module 303 is specifically configured to obtain an initial key and N key parameters, where N is a positive integer; and generate an N^{th} encryption key based on an (N-1)^{th} encryption key and an N^{th} key parameter that are obtained, where a first encryption key is generated based on the initial key and a first key parameter.

Optionally, the creation module 303 is specifically configured to encrypt, by using each encryption key in sequence, the session state information based on an order of encrypting the session state information with each encryption key, to obtain the encrypted session state information, where for each encryption key, session state information obtained after encryption with a previous encryption key is encrypted by using the encryption key, to obtain session state information encrypted with the encryption key.

Optionally, the creation module 303 is specifically configured to encrypt, by using the encryption key, the session state information obtained after encryption with the previous encryption key, to obtain basic encrypted session state information; and permute the basic encrypted session state information by using at least one predetermined permutation method, to obtain the session state information encrypted with the encryption key, where the permutation method includes at least one of nonlinear permutation, linear permutation, or reverse permutation.

Optionally, the resuming module 302 is specifically configured to perform, based on a predetermined integrity verification algorithm, integrity verification on the session state information carried in the connection request; and if it is determined that the session state information is complete, resume the session between the server and the client device based on the session state information.

Optionally, the resuming module 302 is specifically configured to determine, based on a key identifier carried in the session state information, each decryption key corresponding to the session state information; decrypt the session state information by using each decryption key, to obtain decrypted session state information; and resume the session between the server and the client device based on the decrypted session state information.

FIG. 4 is a schematic diagram illustrating another data transmission apparatus, according to this specification. The apparatus includes: a determining module 401, configured to determine a target server, where the target server is configured to perform data transmission with a client device; and a determining and executing module 402, configured to determine whether the client device locally stores session state information based on which a session is performed with the target server; and if yes, send a connection request carrying the session state information to the target server, so that the target server resumes the session between the server and the client device based on the session state information and performs data transmission through the resumed session; or if no, send a connection request to the target server, so that the target server creates a session between the server and the client device based on the connection request.

This specification further provides a computer-readable storage medium. The storage medium stores a computer program, and the computer program can be configured to perform the above-mentioned data transmission method provided in FIG. 1.

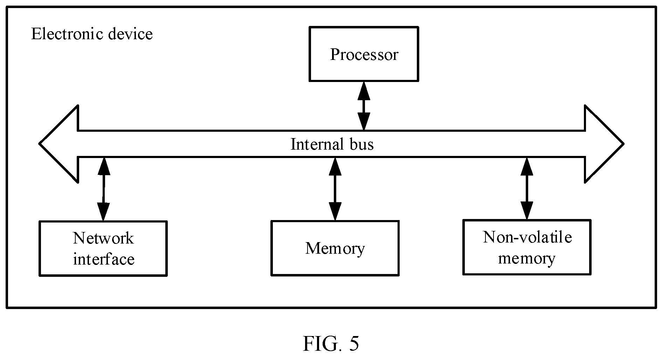

This specification further provides a schematic diagram illustrating a structure of an electronic device, shown in FIG. 5, corresponding to FIG. 1. As shown in FIG. 5, in terms of hardware, the electronic device includes a processor, an internal bus, a network interface, a memory, and a non-volatile memory, and certainly can further include hardware needed by another service. The processor reads a corresponding computer program from the non-volatile memory into the memory and runs the computer program, to implement the above-mentioned data transmission method in FIG. 1. Certainly, in addition to a software implementation, this specification does not rule out another implementation, for example, a logic device or a combination of software and hardware. To be specific, an entity for performing the following processing procedure is not limited to each logic unit, and can be hardware or a logic device.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. A designer performs programming to "integrate" a digital system to a PLD without requesting a chip manufacturer to design and produce an application-specific integrated circuit chip. In addition, at present, instead of manually manufacturing an integrated circuit chip, this type of programming is mostly implemented by using "logic compiler" software. The programming is similar to a software compiler used to develop and write a program. Before compilation, source code needs to be written in a particular programming language, which is referred to as a hardware description language (HDL). The HDL is not limited to only one type. Instead, there are many types of HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-highspeed integrated circuit hardware description language (VHDL) and Verilog are most commonly used. A person skilled in the art should also be aware that a hardware circuit that implements a logical method procedure can be readily obtained once the method procedure is logically programmed by using the several hardware description languages and is programmed into an integrated circuit.

A controller can be implemented in any appropriate way. For example, the controller can take a form of a microprocessor or a processor and a computer-readable medium storing computer-readable program code (such as software or firmware) executable by the microprocessor or the processor, a logic gate, a switch, an application-specific integrated circuit (ASIC), a programmable logic controller, and an embedded microcontroller. Examples of the controller include but are not limited to the following microcontrollers: ARC 625D, Atmel AT91SAM, Microchip PIC18F26K20, and Silicone Labs C8051F320. A memory controller can also be implemented as part of control logic of the memory. A person skilled in the art also knows that, in addition to implementing the controller in a form of pure computer-readable program code, a method step can be logically programmed, so that the controller implements the same function in a form of a logic gate, a switch, an application-specific integrated circuit, a programmable logic controller, an embedded microcontroller, etc. Therefore, the controller can be considered as a hardware component, and an apparatus configured to implement various functions in the controller can also be considered as a structure in the hardware component. Alternatively, the apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, in an implementation of this specification, functions of units can be implemented in the same or more software and/or hardware.

A person skilled in the art should understand that the embodiments of this specification can be provided as methods, systems, or computer program products. Therefore, this specification can use a form of hardware only embodiments, software only embodiments, or embodiments with a combination of software and hardware. In addition, this specification can use a form of a computer program product implemented on one or more computer-usable storage media (including but not limited to a magnetic disk storage, a CD-ROM, an optical storage, etc.) that include computer-usable program code.

This specification is described with reference to the flowcharts and/or block diagrams of the method, the device (system), and the computer program product according to some embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a function specified in one or more procedures in the flowcharts and/or one or more blocks in the block diagrams.

These computer program instructions can also be stored in a computer-readable memory that can instruct a computer or another programmable data processing device to work in a specific way, so that an instruction stored in the computer-readable memory generates an artifact including an instruction apparatus, and the instruction apparatus implements a function specified in one or more procedures in the flowcharts and/or one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a function specified in one or more procedures in the flowcharts and/or one or more blocks in the block diagrams.

In a typical configuration, a computing device includes one or more processors (CPUs), one or more input/output interfaces, one or more network interfaces, and one or more memories.

The memory may include a non-persistent memory, a random access memory (RAM), a non-volatile memory, and/or another form in a computer-readable medium, for example, a read-only memory (ROM) or a flash memory (flash RAM). The memory is an example of the computer-readable medium.

The computer-readable medium includes persistent, non-persistent, removable, and non-removable media that can store information by using any method or technology. The information can be a computer-readable instruction, a data structure, a program module, or other data. Examples of the computer storage medium include but are not limited to a phase change random access memory (PRAM), a static RAM (SRAM), a dynamic RAM (DRAM), a RAM of another type, a read-only memory (ROM), an electrically erasable programmable ROM (EEPROM), a flash memory or another memory technology, a compact disc ROM (CD-ROM), a digital versatile disc (DVD), or another optical storage, a cassette, a cassette magnetic disk storage, or another magnetic storage device or any other non-transmission medium. The computer storage medium can be configured to store information that can be accessed by a computing device. Based on the definition in the present specification, the computer-readable medium does not include transitory media such as a modulated data signal and carrier.

It is worthwhile to further note that the terms "comprise", "include", or any other variant thereof are intended to cover a non-exclusive inclusion, so that a process, a method, a product, or a device that includes a list of elements not only includes those elements but also includes other elements which are not expressly listed, or further includes elements inherent to the process, method, product, or device. Without more constraints, an element preceded by "includes a ..." does not preclude existence of other identical elements in the process, method, product, or device that includes the element.

A person skilled in the art should understand that the embodiments of this specification can be provided as methods, systems, or computer program products. Therefore, this specification can use a form of hardware only embodiments, software only embodiments, or embodiments with a combination of software and hardware. In addition, this specification can use a form of a computer program product implemented on one or more computer-usable storage media (including but not limited to a magnetic disk storage, a CD-ROM, an optical storage, etc.) that include computer-usable program code.

This specification can be described in a general context of a computer-executable instruction executed by a computer, for example, a program module. Generally, the program module includes a routine, a program, an object, a component, a data structure, etc. executing a specific task or implementing a specific abstract data type. This specification can also be practiced in a distributed computing environment in which tasks are executed by remote processing devices connected via a communication network. In the distributed computing environment, the program module can be located in both local and remote computer storage media including storage devices.

The embodiments of this specification are all described in a progressive way. Mutual reference can be made for the same or similar parts between the embodiments. Each embodiment focuses on differences from other embodiments. Particularly, a system embodiment is similar to a method embodiment, and therefore is described briefly. For related parts, reference can be made to related descriptions in the method embodiment.

The foregoing descriptions are merely some embodiments of this specification and are not intended to limit this specification. A person skilled in the art can make various modifications or changes to this specification. Any modification, equivalent replacement, or improvement made without departing from the spirit and principle of this application shall fall within the scope of the claims of this specification.

## Claims

1. A data transmission method, wherein the method is applied to a server and comprises:
determining, in response to a connection request sent by a client device, whether the connection request carries session state information, wherein the session state information comprises parameters based on which the server and the client device perform data transmission through a created session, and a session identifier; and
if yes, resuming the session between the server and the client device based on the session state information carried in the connection request, and performing data transmission with the client device through the resumed session; or
if no, creating a session between the server and the client device, and sending session state information generated for the created session to the client device, so that the client device stores the session state information.

2. The method according to claim 1, wherein the sending session state information generated for the created session to the client device comprises:
encrypting, by using each predetermined encryption key, the session state information generated for the created session, to obtain encrypted session state information; and
sending the encrypted session state information to the client device.

3. The method according to claim 2, wherein determining each encryption key comprises:
obtaining an initial key and N key parameters, wherein N is a positive integer; and
generating an N^{th} encryption key based on an (N-1)^{th} encryption key and an N^{th} key parameter that are obtained, wherein a first encryption key is generated based on the initial key and a first key parameter.

4. The method according to claim 2, wherein the encrypting, by using each predetermined encryption key, the session state information generated for the created session, to obtain encrypted session state information comprises:
encrypting, by using each encryption key in sequence, the session state information based on an order of encrypting the session state information with each encryption key, to obtain the encrypted session state information, wherein
for each encryption key, session state information obtained after encryption with a previous encryption key is encrypted by using the encryption key, to obtain session state information encrypted with the encryption key.

5. The method according to claim 4, wherein encrypting, by using the encryption key, the session state information obtained after encryption with the previous encryption key, to obtain the session state information encrypted with the encryption key comprises:
encrypting, by using the encryption key, the session state information obtained after encryption with the previous encryption key, to obtain basic encrypted session state information; and
permuting the basic encrypted session state information by using at least one predetermined permutation method, to obtain the session state information encrypted with the encryption key, wherein the permutation method comprises at least one of nonlinear permutation, linear permutation, or reverse permutation.

6. The method according to claim 1, wherein the resuming the session between the server and the client device based on the session state information carried in the connection request comprises:
performing, based on a predetermined integrity verification algorithm, integrity verification on the session state information carried in the connection request; and
if it is determined that the session state information is complete, resuming the session between the server and the client device based on the session state information.

7. The method according to claim 2, wherein the resuming the session between the server and the client device comprises:
determining, based on a key identifier carried in the session state information, each decryption key corresponding to the session state information;
decrypting the session state information by using each decryption key, to obtain decrypted session state information; and
resuming the session between the server and the client device based on the decrypted session state information.

8. A data transmission method, wherein the method is applied to a client device and comprises:
determining, by the client device, a target server, wherein the target server is configured to perform data transmission with the client device;
determining whether the client device locally stores session state information based on which a session is performed with the target server; and
if yes, sending a connection request carrying the session state information to the target server, so that the target server resumes the session between the server and the client device based on the session state information and performs data transmission through the resumed session; or
if no, sending a connection request to the target server, so that the target server creates a session between the server and the client device based on the connection request.

9. A data transmission apparatus, comprising:
a determining module, configured to determine, in response to a connection request sent by a client device, whether the connection request carries session state information, wherein the session state information comprises parameters based on which a server and the client device perform data transmission through a created session, and a session identifier;
a resuming module, configured to resume the session between the server and the client device based on the session state information carried in the connection request, and perform data transmission with the client device through the resumed session, when it is determined that the connection request carries the session state information; and
a creation module, configured to create a session between the server and the client device, and send session state information generated for the created session to the client device, when it is determined that the connection request does not carry the session state information, so that the client device stores the session state information.

10. A data transmission apparatus, comprising:
a determining module, configured to determine a target server, wherein the target server is configured to perform data transmission with a client device; and
a determining and executing module, configured to determine whether the client device locally stores session state information based on which a session is performed with the target server; and if yes, send a connection request carrying the session state information to the target server, so that the target server resumes the session between the server and the client device based on the session state information and performs data transmission through the resumed session; or if no, send a connection request to the target server, so that the target server creates a session between the server and the client device based on the connection request.

11. A computer-readable storage medium, wherein the storage medium stores a computer program, and when the computer program is executed by a processor, the method according to any one of claims 1 to 8 is implemented.

12. An electronic device, comprising a memory, a processor, and a computer program stored in the memory and capable of running on the processor, wherein when the processor executes the program, the method according to any one of claims 1 to 8 is implemented.
